# EUROPÄISCHE PATENTSCHRIFT

(11) **EP 3 108 159 B1**
(45) Veröffentlichungstag und Bekanntmachung des Hinweises auf die Patenterteilung: **21.02.2018**
(21) Anmeldenummer: 14827719.7
(22) Anmeldetag: 11.12.2014
(51) Int. Cl.: F16H 63/34, F16H 63/20, F16H 63/30, F16H 57/00, F16H 61/24

(54) **SCHALTANORDNUNG FÜR EIN GETRIEBE**
SHIFTING ARRANGEMENT FOR A TRANSMISSION
DISPOSITIF DE COMMANDE POUR UNE BOÎTE DE VITESSES

(30) Priorität: 18.02.2014 DE 102014202886
(43) Veröffentlichungstag der Anmeldung: 28.12.2016
(73) Patentinhaber: Schaeffler Technologies AG & Co. KG, 91074 Herzogenaurach (DE)
(72) Erfinder: LÖFFELMANN, Jochen, 91330 Eggolsheim (DE); ROST, Markus, 91074 Herzogenaurach (DE)
(86) Internationale Anmeldenummer: PCT/DE2014/200700
(87) Internationale Veröffentlichungsnummer: WO 2015/124129

(56) Entgegenhaltungen:
- DE-A1- 19 805 924
- DE-A1-102008 029 264
- GB-A- 2 295 208
- JP-A- 2008 032 167

## Beschreibung

Die Erfindung betrifft eine Schaltanordnung für ein Getriebe mit den Merkmalen des Oberbegriffs des Anspruchs 1.

Bei Fahrzeugen werden Schalt- und/oder Wählbewegungen zum Schalten beziehungsweise Wählen eines Ganges getriebeseitig durch Schaltmechaniken umgesetzt. Eine übliche Schaltmechanik umfasst eine Schaltwelle, welche zum Auswählen eines Ganges oder einer Ganggasse in Längsrichtung verschoben und zum Schalten eines Ganges um die eigene Längsachse geschwenkt wird. Die Schaltwelle weist oftmals neben Schalthebeln zur Betätigung der Schaltwelle weitere Funktionsbereiche, wie zum Beispiel Rastbereiche zum Steuern der Wähl- beziehungsweise Schaltkraft sowie Zwangsführungsbereiche auf, um nur Bewegungen der Schaltwelle zu ermöglichen, die zu einer Schalt- und/oder Wählbewegung erforderlich sind.

Bei einem Transport und der Montage derartiger Schaltmechaniken tritt das Problem auf, dass die Schaltmechaniken ohne Ankopplung an weitere Getriebeteile einen nicht definierten Schaltzustand einnehmen können. Zur Montage der Schaltmechanik muss diese zunächst in eine vorab definierte Stellung gebracht werden. Auch bei dem Einstellen der Schaltmechanik muss stets zunächst der vordefinierte Schaltzustand eingestellt werden.

Zur Sicherung des Transports und zur Vereinfachung der Montage ist es bekannt, Arretierstifte zu verwenden, welche durch einen Gehäusebereich durchgeführt und in eine Aufnahme der Schaltwelle eingesteckt sind. Ein derartiger Bolzen als Arretierstift ist beispielsweise aus DE 198 05 924 A1 bekannt. Durch einen derartigen Arretierstift ist die Position der Schaltwelle festgelegt, sodass die Schaltmechanik in einfacher Weise transportiert und montiert werden kann.

Die Druckschrift DE 10 2012 210 014 A1 offenbart eine vorstehend beschreibene Schaltmechanik. Eine gattungsgemäße Schaltanordnung ist in DE 10 2008 029 264 A1 gezeigt.

### Gebiet der Erfindung

Es ist Aufgabe der vorliegenden Erfindung, die Montage einer Schaltanordnung weiter zu vereinfachen. Diese Aufgabe wird durch eine Schaltanordnung mit den Merkmalen des Anspruchs 1 gelöst. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird eine Schaltanordnung vorgeschlagen, welche für ein Getriebe geeignet und/oder ausgebildet ist. Bei dem Getriebe handelt es sich insbesondere um das Antriebsgetriebe eines Fahrzeugs. Im Speziellen handelt es sich um ein Schalt- und/oder Wechselgetriebe.

Die Schaltanordnung umfasst einen Gehäuseabschnitt, wobei der Gehäuseabschnitt einen Innenraum begrenzt, insbesondere gegen eine Umgebung öldicht abschließt, welcher nachfolgend Schaltraum genannt wird. In dem Schaltraum ist eine Schaltwelle bewegbar angeordnet. Die Schaltwelle ist besonders bevorzugt in ihrer Längserstreckung verschiebbar und um ihre Längserstreckung oder Längsachse schwenkbar in dem Schaltraum positioniert.

Ferner umfasst die Schaltanordnung eine Schaltkulisseneinrichtung mit einer Schaltkulisse, wobei die Schaltkulisseneinrichtung mit dem Gehäuseabschnitt fest verbunden ist. Z.B. ist die Schaltkulisseneinrichtung an dem Gehäuseabschnitt mit einer Schraub- oder Nietverbindung befestigt. Die Schaltkulisseneinrichtung bildet eine Zwangsführung für die Schaltwelle relativ zu dem Gehäuseabschnitt für Schalt- und/oder Wählbewegungen der Schaltwelle. Bei der Schaltkulisse handelt es sich besonders bevorzugt um eine H-förmige oder mehrfach H-förmige Schaltkulisse. Besonders bevorzugt weist die Schaltkulisse mindestens oder genau eine Wählgasse, sowie eine Mehrzahl von Schaltgassen auf, wobei die Schaltgassen gewinkelt, insbesondere senkrecht zu der Wählgasse ausgerichtet sind. Besonders bevorzugt sind für Vorwärtsgänge je zwei Schaltgassen in Flucht zueinander angeordnet und zugleich durch die Wählgasse voneinander getrennt. Vorzugsweise bildet eine Schaltgasse eine Ausnahme, welche dem Rückwärtsgang zugeordnet ist, wobei die Schaltgasse für den Rückwärtsgang keine weitere Schaltgasse in Flucht aufweist. Insbesondere bilden Wählgasse und Schaltgasse für den Rückwärtsgang eine L-Form.

Die Schaltanordnung weist eine Sicherungseinrichtung auf, wobei die Sicherungseinrichtung einen Sicherungsabschnitt umfasst. Der Sicherungsabschnitt ist zwischen einer Sicherungsposition und einer Freigabeposition bewegbar. In der Sicherungsposition des Sicherungsabschnitts ist die Schaltwelle mit dem Gehäuseabschnitt über den Sicherungsabschnitt gekoppelt. Einmechanischer Sicherungsweg verläuft somit von der Schaltwelle gegebenenfalls über Zwischenelemente über den Sicherungsabschnitt gegebenenfalls über weitere Zwischenelemente zu dem Gehäuseabschnitt. In dem Freigabezustand des Sicherungsabschnitts ist die Schaltwelle dagegen freigegeben. Insbesondere ist der Sicherungsweg durch Änderung der Position des Sicherungsabschnitts unterbrochen.

Im Rahmen der Erfindung wird vorgeschlagen, dass der Sicherungsabschnitt in der Sicherungsposition in einer radialen Richtung zu der Schaltwelle überlappend, insbesondere deckungsgleich zu der Schaltkulisseneinrichtung, insbesondere deckungsgleich zu der Schaltkulisse, angeordnet ist. Besonders bevorzugt verläuft der Sicherungsweg durch die Schaltkulisseneinrichtung, insbesondere durch die Schaltkulisse, hindurch.

Der Erfindung liegt die Überlegung zugrunde, dass bei einem Einstellen der Schaltanordnung als Teil der Montage der Schaltanordnung die Einstellung im Bereich der Schaltkulisseneinrichtung als Zwangsführung für die Schaltwelle besonders sorgfältig durchgeführt werden muss. Im Bereich der Schaltkulisseneinrichtung sind somit die kleinsten Toleranzen erlaubt. Bislang wurde die Schaltwelle durch einen Arretierstift an einer beliebigen Position an der Schaltwelle arretiert, welche gegebenenfalls auch weit entfernt von der Schaltkulisseneinrichtung angeordnet sein kann. Dieser Abstand führte dazu, dass etwaige Toleranzen in der Lage der Schaltwelle relativ zu dem Gehäuse zu vergrößerten Toleranzen bei der Positionierung der Schaltwelle relativ zu der Schaltkulisseneinrichtung geführt haben. Dadurch, dass der Sicherungsabschnitt in der Sicherungsposition in einer radialen Richtung zu der Schaltwelle deckungsgleich zu der Schaltkulisseneinrichtung angeordnet ist, insbesondere dadurch, dass der Sicherungsweg durch die Schaltkulisseneinrichtung hindurch verläuft, wird erreicht, dass die trotz der Sicherung verbleibenden Toleranzen im Bereich der toleranzempfindlichen Schaltkulisseneinrichtung besonders gering gehalten werden. Mit der Verringerung der Toleranzen ist es möglich, die Schaltanordnung relativ zu dem Getriebe mit einem geringeren Aufwand passend einzustellen, sodass die Montage der Schaltanordnung vereinfacht ist.

Bei einer bevorzugten, konkreten Ausgestaltung der Erfindung ist die Schaltanordnung als ein Schaltdom ausgebildet, wobei der Gehäuseabschnitt als ein Deckel realisiert ist, in dem die Schaltwelle bewegbar gelagert und die Schaltkulisseneinrichtung festgelegt ist. Derartige Schaltdome werden eingesetzt, um Getriebe von Fahrzeugen modulartig zusammensetzen zu können, wobei es vorteilhaft ist, diese vor der Montage in einen definierten Zustand zu versetzen.

Gemäß der Erfindung weist die Schaltanordnung ein Führungsorgan auf, wobei das Führungsorgan mit der Schaltwelle fest verbunden ist und in die Schaltkulisseneinrichtung, insbesondere in die Schaltkulisse der Schaltkulisseneinrichtung, eingreift. Das Führungsorgan, insbesondere ausgebildet als ein Führungsstift oder als ein Führungsfinger, wird in der Schaltkulisseneinrichtung, insbesondere in der Schaltkulisse, formschlüssig geführt und bildet damit zusammen mit der Schaltkulisse die Zwangsführung für die Schaltwelle. Es wird vorgeschlagen, dass der Sicherungsabschnitt in der Sicherungsposition das Führungsorgan in mindestens einer Sicherungsrichtung sichert. In der allgemeinsten Ausführung der Erfindung ist das Führungsorgan durch den Sicherungsabschnitt so gesichert, dass die Schaltwelle in einer Wählrichtung für die Wählrichtung der Schaltwelle und/oder in einer Schaltrichtung für die Schaltrichtung für die Schaltwelle gesichert ist. Vorzugsweise ist die Schaltrichtung senkrecht zu der Wählrichtung orientiert. In dieser Ausgestaltung wird der Sicherungsweg von dem Gehäuseabschnitt, durch die Schaltkulisseneinrichtung, über den Sicherungsabschnitt und das Führungsorgan umgesetzt. Insbesondere durchgreifen die verbundenen Bauteile Sicherungsabschnitt und Führungsorgan die Schaltkulisseneinrichtung, insbesondere die Schaltkulisse.

Bei einer bevorzugten Realisierung der Erfindung weist der Sicherungsabschnitt am freien Ende einen Aufnahmebereich auf, wobei das Führungsorgan, wenn sich der Sicherungsabschnitt in der Sicherungsposition befindet, in dem Aufnahmebereich aufgenommen ist. Insbesondere ist das Führungsorgan von dem Sicherungsabschnitt in einer Umlaufrichtung um die Längserstreckung der verbundenen Bauteile wahlweise abschnittsweise oder sogar vollständig umlaufend umgriffen. Durch diese Ausgestaltung können Details der Koppelstruktur zwischen dem Sicherungsabschnitt und dem Führungsorgan maßgeblich auf dem Sicherungsabschnitt realisiert werden, so dass das Führungsorgan unverändert verbleibt, so dass dessen weiterer Betrieb nicht eingeschränkt ist.

Bei einer bevorzugten Weiterbildung der Erfindung ist der Sicherungsabschnitt in der Sicherungsposition ausgebildet, das Führungsorgan gegenüber der Schaltkulisseneinrichtung abzustützen. Somit bildet das Führungsorgan einen ersten Stützpartner und die Schaltkulisseneinrichtung einen zweiten Stützpartner für den Sicherungsabschnitt. Diese Ausgestaltung hat den Vorteil, dass das Führungsorgan relativ zu der Schaltkulisseneinrichtung positioniert wird. Der Sicherungsabschnitt wird durch Anlage an die Schaltkulisseneinrichtung in der Lage definiert, das Führungsorgan wird durch Aufnahme in dem Aufnahmebereich in dem Sicherungsabschnitt in der Lage definiert. Insbesondere findet die Lagedefinition in einer Ebene statt, die durch die Schalt- und/oder Wählgassen der Schaltkulisseneinrichtung vorgegeben ist. Besonders bevorzugt greift der Sicherungsabschnitt in die Schaltkulisseneinrichtung, insbesondere in die Schaltkulisse, ein, um in der Lage definiert zu werden. Diese Ausgestaltung hat den Vorteil, dass die Relativlage zwischen Führungsorgan und Schaltkulisseneinrichtung, insbesondere Schaltkulisse, mit den konstruktiv kleinstmöglichen Toleranzen definiert ist.

Bei einer anderen Ausgestaltung der Erfindung weist das Führungsorgan einen Aufnahmebereich auf, wobei der Sicherungsabschnitt in der Sicherungsposition in dem Aufnahmebereich aufgenommen ist. Gegenüber der vorher genannten Konstellation ist die Position des Aufnahmebereichs vertauscht worden. Diese Ausgestaltung bildet eine konstruktive Alternative. Eine weitere Alternative wird dadurch erreicht, dass der Sicherungsabschnitt und das Führungsorgan jeweils einen Aufnahmebereich aufweisen, wobei die beiden Aufnahmebereiche ineinander greifen.

Bei einer besonders bevorzugten Realisierung der Erfindung ist vorgesehen, dass der Sicherungsabschnitt in der Sicherungsposition das Führungsorgan in der Sicherungsrichtung sichert und in einer dazu senkrechten Richtung freigibt, insbesondere einen Bewegungsspielraum gibt. Es wird somit in der Sicherungsrichtung, insbesondere beidseitig zu der Sicherungsrichtung, eine minimale Toleranz eingestellt und in einer Richtung senkrecht hierzu eine größere Toleranz erlaubt oder sogar ermöglicht. Besonders bevorzugt ist die Sicherungsrichtung als die Wählrichtung ausgebildet. Dieser Ausgestaltung liegt die Überlegung oder Erfahrung zugrunde, dass gerade die Einstellung der Sperre für die Anwahl eines Rückwärtsgangs bei der Schaltanordnung besonders genau eingestellt werden muss, um ein saubere oder komfortable Funktion zu gewährleisten. Vor diesem Hintergrund ist es vorteilhaft, dass die Wählrichtung als Sicherungsrichtung gesperrt, die Schaltrichtung jedoch freigegeben ist. Es ist sogar besonders bevorzugt, dass das Führungsorgan in einer Position gesichert ist, die sich in dem Kreuzungspunkt zwischen der Verbindung von zwei Schaltgassen und der Weiterführung der Wählgasse zu dem Rückwärtsgang befindet. Mit dieser Position des gesicherten Führungsorgans und zudem der Freigabe oder der begrenzten Freigabe in der Schaltrichtung kann die Sperre für den Rückwärtsgang besonders genau eingestellt werden.

Bei einer möglichen konstruktiven Ausgestaltung weist der Aufnahmebereich - wahlweise angeordnet am Sicherungsabschnitt und/oder am Führungsorgan - eine Führungskontur auf, welche als eine ovale Kontur oder als eine Langlochkontur ausgebildet ist. Die Längserstreckung, also die längere Achse der ovalen Kontur beziehungsweise Langlochkontur, erstreckt sich senkrecht zu der Sicherungsrichtung. Insbesondere weist die Führungskontur in der Sicherungsrichtung eine Form auf, die das Führungsorgan oder den Sicherungsabschnitt formschlüssig führt und in der dazu senkrechten Richtung frei verschiebbar lässt. Durch eine derartige Führungskontur wird das zuvor beschriebene, gewünschte Sicherungsverhalten konstruktiv umgesetzt.

Bei einer vorteilhaften Realisierung der Erfindung weist die Sicherungseinrichtung einen Betätigungsabschnitt auf, welcher mit dem Sicherungsabschnitt gekoppelt ist. Insbesondere bilden Betätigungsabschnitt und Sicherungsabschnitt gemeinsam ein Betätigungsorgan, welches in einer Betätigungsrichtung betätigbar ist, sodass der Sicherungsabschnitt von der Sicherungsposition in die Freigabeposition beziehungsweise in Gegenrichtung bewegbar ist. Es ist ferner vorgesehen, dass der Sicherungsabschnitt den Aufnahmebereich mit der Führungskontur aufweist. In diesem Zusammenhang ist es besonders bevorzugt, dass das Betätigungsorgan in Bezug auf die Betätigungsrichtung verdrehsicher in dem Gehäuseabschnitt angeordnet ist. Beispielsweise kann das Betätigungsorgan in einem Verbindungsabschnitt zwischen Betätigungsabschnitt und Sicherungsabschnitt eine Abflachung aufweisen, welche durch einen Querbolzenabschnitt in dem Gehäuseabschnitt gegen eine Verdrehung gesichert ist. Besonders bevorzugt ist die Länge der Abflachung in der Betätigungsrichtung so dimensioniert, dass ein Endanschlag für die Sicherungsposition und/oder für die Freigabeposition des Sicherungsabschnitts festgelegt ist.

Besonders bevorzugt ist der Betätigungsabschnitt in Bezug auf die Betätigungsrichtung nicht rotationssymmetrisch ausgebildet, sodass eine versehentliche Verdrehung des Betätigungsorgans und damit der Führungskontur vermieden ist.

Ein weiterer möglicher Gegenstand der Erfindung bildet ein Schaltgetriebe mit der Schaltanordnung, wie dies zuvor beschrieben wurde.

Weitere Merkmale, Vorteile und Wirkungen der Erfindung ergeben sich aus der nachfolgenden Beschreibung eines bevorzugten Ausführungsbeispiels der Erfindung sowie der beigefügten Figuren. Dabei zeigen:
Figur 1 eine schematische dreidimensionale Darstellung einer Schaltanordnung als ein Ausführungsbeispiel der Erfindung;
Figur 2 die Schaltanordnung in Figur 1 in gleicher Darstellung, jedoch mit zeichnerisch unterdrücktem Gehäuseabschnitt;
Figur 3 einen schematischen Längsschnitt in Detaildarstellung im Bereich der Sicherungseinrichtung in den vorhergehenden Figuren;
Figur 4 eine schematische Unteransicht auf eine Schnittebene gemäß der Pfeile 4-4 in der Figur 3.

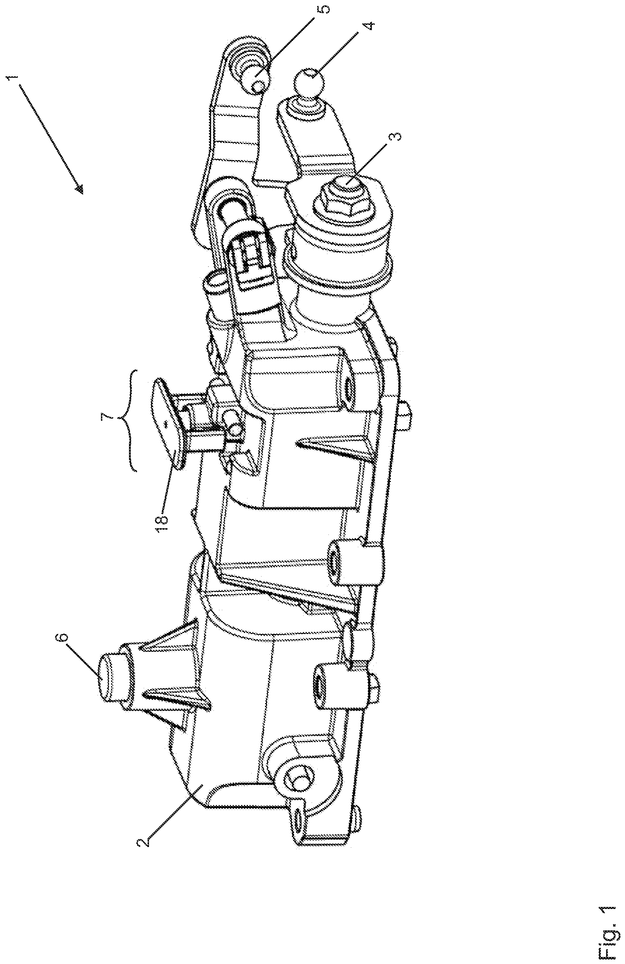

Die Figur 1 zeigt in einer schematischen dreidimensionalen Darstellung eine Schaltanordnung 1, ausgebildet als ein Schaltdom, als ein Ausführungsbeispiel der Erfindung. Die Schaltanordnung 1 dient dazu, Schalt- und/oder Wählbewegungen, welche von einer Aktorik oder von einem Fahrer eingeleitet werden, über ein Getriebe, insbesondere ein formschlüssiges Getriebe oder über ein Seilzuggetriebe, in Schalt- und/oder Wählbewegungen eines Schaltgetriebes beziehungsweise Wechselgetriebes umzusetzen. Die Schaltanordnung 1 ist zur Integration und/oder Montage in einem Fahrzeug ausgebildet.

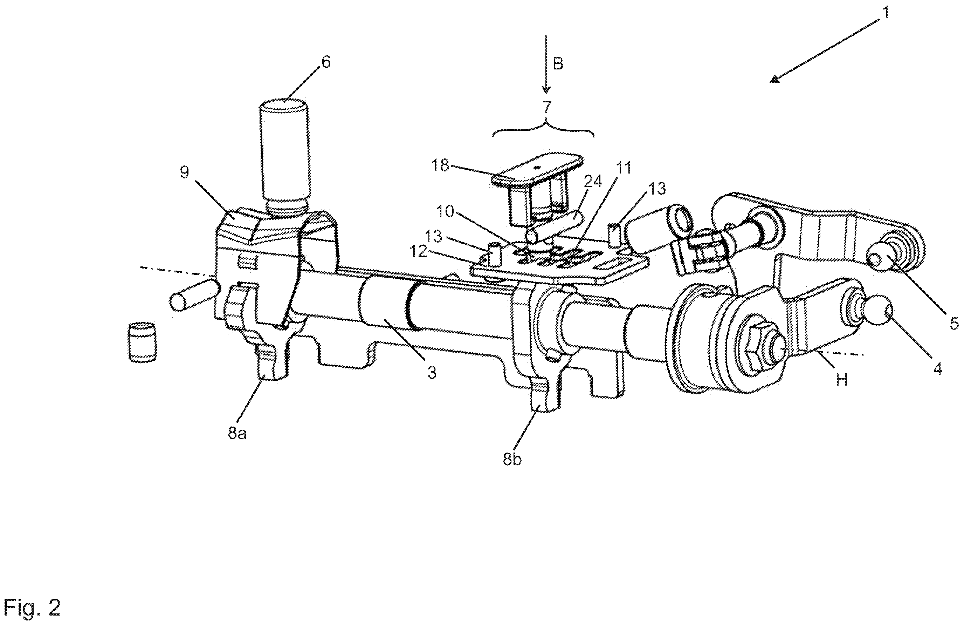

Die Schaltanordnung 1 umfasst einen Gehäuseabschnitt 2, welcher als ein Deckel ausgebildet ist, wobei der Gehäuseabschnitt 2 auf ein nicht dargestelltes Anschlussgehäuse aufgesetzt und mit diesem verbunden werden kann, sodass ein Innenraum, insbesondere ein Schaltraum, gebildet ist. In dem Gehäuseabschnitt 2 ist eine Schaltwelle 3 gelagert, welche in der Figur 1 nur an dem herausragenden Ende zu erkennen ist, in der Figur 2 jedoch vollständig dargestellt ist. Die Schaltwelle 3 ist mit einem Schalthebel 4 verbunden, welcher die Schaltwelle 3 um die eigene Längserstreckung schwenken kann, um in dem nachgeschalteten Wechselgetriebe einen Gang zu schalten. Ferner umfasst die Schaltanordnung 1 einen Wählhebel 5, welcher auf dem Gehäuseabschnitt 2 so angeordnet ist, dass dieser bei einer Betätigung einen axialen Hub der Schaltwelle 3, also eine Verschiebung der Schaltwelle 3 in ihrer Längserstreckung, ermöglicht. Der Schalthebel 4 wird benutzt, um Schaltbewegungen in die Schaltanordnung 1 einzuleiten, der Wählhebel 5 wird benutzt, um Wählbewegungen in die Schaltanordnung 1 einzuleiten. Neben verschiedener anderer Ausformungen zeigt der Gehäuseabschnitt 2 einen Aufnahmebereich für eine Arretierung 6 sowie den äußeren Teil einer Sicherungseinrichtung 7. Der Aufbau und die Funktion der Sicherungseinrichtung 7 werden in der nachfolgenden Figur beschrieben.

In der Figur 2 sind eine Auswahl der bewegbaren Komponenten oder der Funktionskomponenten der Schaltanordnung 1 dargestellt, wobei der Gehäuseabschnitt 2 jedoch graphisch ausgeblendet ist. Die Schaltwelle 3 erstreckt sich von dem Schalthebel 4 bis zu einer endseitigen Lagerung, welche jedoch in der Figur 2 nicht dargestellt ist. Auf der Schaltwelle 3 sind neben zwei Schaltfingern 8a, b eine Rastkontur 9 angeordnet, welche durch die Arretierung 6 bei Schalt- und/oder Wählbewegungen abgefahren wird, um bei Gangpositionen zu arretieren beziehungsweise Schalt- und/oder Wählkräfte zu erzeugen. Von der Rastkontur 9 beabstandet ist auf der Schaltwelle 3 ein Führungsorgan 10 aufgesetzt und mit der Schaltwelle 3 dreh- und verschiebefest verbunden. Das Führungsorgan 10 ist in radialer Richtung zu einer Hauptachse H der Schaltwelle 3 ausgerichtet und als ein Bolzenabschnitt oder als ein Finger realisiert.
Das Führungsorgan 10 greift in eine Schaltkulisse 11 einer Schaltkulisseneinrichtung 12 ein. Die Schaltkulisse 11 ist in der Schaltkulisseneinrichtung 12 als eine Aussparung eingebracht. Die Schaltkulisseneinrichtung 12 ist bei diesem Ausführungsbeispiel als eine ebene Platte ausgebildet, welche über Befestigungselemente 13 fest mit dem Gehäuseabschnitt 2 verbunden ist.

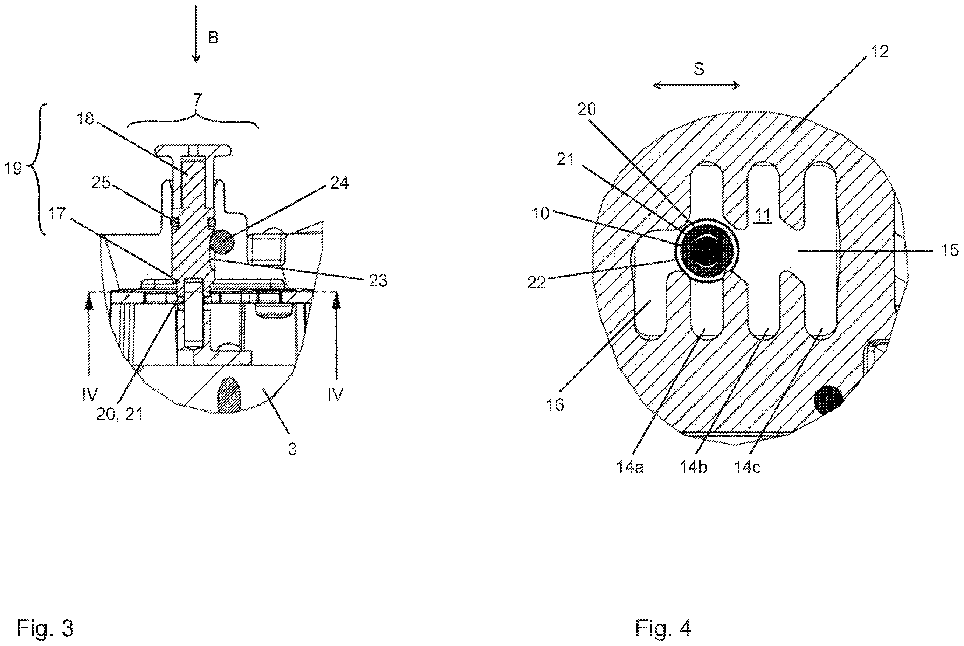

In der Figur 4 ist eine Schnittdarstellung durch die Schaltkulisseneinrichtung 12 gezeigt, wobei die Form der Schaltkulisse 11 besser erkennbar ist. Bei der Schaltkulisse 11 sind drei Schaltgassen 14a, b, c eingebracht, welche parallel zueinander ausgerichtet sind und welche mit ihren Endpositionen einen Schaltzustand für die Schaltwelle 3 definieren. So definiert die Schaltgasse 14a beispielsweise die Schaltzustände für den ersten und zweiten Gang, die Schaltgasse 14b für den dritten und vierten Gang und die Schaltgasse 14c für den fünften und sechsten Gang. Es ist denkbar, dass die Schaltkulisse 11 auch für weniger oder mehr oder für eine andere Verteilung der Schaltzustände der Schaltwelle 3 ausgelegt sein kann. Die Schaltgassen 14a, b, c werden mittig durch eine Wählgasse 15 durchquert, welche ein Wechsel des Führungsorgans 10 von einer Schaltgasse zu einer nächsten Schaltgasse ermöglicht. An einem Ende schließt sich eine nur einseitig von der Wählgasse 15 abgehende Schaltgasse 16 an, welche für den Schaltzustand der Schaltwelle 3 zum Einlegen des Rückwärtsgangs ausgebildet ist. Im Betrieb fährt das Führungsorgan 10 in Abhängigkeit der Schalt- und/oder Wählbewegungen, die über den Schalthebel 4 und den Wählhebel 5 eingeleitet werden, die Schaltkulisse 11 ab, sodass das Zusammenspiel des Führungsorgans 10 und der Schaltkulisse 11 eine Zwangsführung für die Schaltwelle 3 bilden.

In der Figur 3 ist eine schematische Längsschnittdarstellung durch die Schaltwelle 3 und damit auch durch die Sicherungseinrichtung 7 gezeigt. Die Sicherungseinrichtung 7 weist einen Sicherungsabschnitt 17 sowie einen Betätigungsabschnitt 18 auf. Sicherungsabschnitt 17 und Betätigungsabschnitt 18 bilden zusammen ein Betätigungsorgan 19 bilden. Das Betätigungsorgan 19 ist in dem Gehäuseabschnitt 2 in einer Betätigungsrichtung B, welche radial zu der Schaltwelle 3 ausgerichtet ist, von einer Sicherungsposition in eine Freigabeposition und in Gegenrichtung verschiebbar.

Der Sicherungsabschnitt 17 weist an dem der Schaltwelle 3 zugewandten Ende einen Aufnahmebereich 20 auf, welcher eine Führungskontur 21 für das Führungsorgan 10 bildet. Die Führungskontur 21 ist als eine Aussparung in dem Aufnahmebereich 20 ausgebildet und nimmt das freie, von der Schaltwelle 3 wegweisende Ende des Führungsorgans 10 auf. Wie sich insbesondere aus der Figur 3 ergibt, ragt das Führungsorgan 10 mit seinem freien Ende in die Schaltkulisseneinrichtung 12 hinein und zudem durch die Schaltkulisseneinrichtung 12 durch. Der Sicherungsabschnitt 17 umgreift das freie Ende des Führungsorgans 10 und ragt ebenfalls in die Schaltkulisseneinrichtung 12 hinein und in diesem Beispiel durch die Schaltkulisseneinrichtung 12 hindurch.

Die Figur 4 zeigt eine schematische Schnittdarstellung der Schaltkulisseneinrichtung 12, in einem Bereich, welcher noch innerhalb der Schaltkulisseneinrichtung 12 angeordnet ist. Aus der Schnittdarstellung ist zu erkennen, dass das Führungsorgan 10 in dem Kreuzungspunkt zwischen der Schaltgasse 14a der Gänge eins/zwei und der Wählgasse 15 beim Übergang zu einem Wählgassenbereich der Wählgasse 15 zu der Schaltgasse 16 angeordnet ist. Bei dieser Ausführungsform hat das Führungsorgan 10 einen kreisrunden Querschnitt. Die Außenkontur des Sicherungsabschnitts 17 teilt sich in axialer Erstreckung in Betätigungsrichtung B in den Aufnahmebereich 20 und einen Stützbereich 22auf, wobei sich der Stützbereich 22 seitlich an den Begrenzungen oder Wänden der Schaltkulisse 12 abstützt, die die Schaltgasse 14a bzw. die Wählgasse 15 bilden. Durch das Abstützen des Stützbereichs an den Wänden bzw. Begrenzungen wird der Sicherungsabschnitt 17 durch den Stützbereich 22 relativ zu der Schaltkulisse 11 und damit relativ zu der Schaltkulisseneinrichtung 12 zentriert oder in der Lage definiert.

Der Aufnahmebereich 20 weist dagegen die Führungskontur 21 mit einer ovalen Form auf, wobei das Führungsorgan 10 durch die Führungskontur 21 in Richtung der Wählgasse 15 als eine Sicherungsrichtung S in beide Richtungen formschlüssig gehalten ist. Dagegen erstreckt sich eine Längserstreckung der Führungskontur 21 in Richtung der Schaltgasse 14a, welche länger als der Durchmesser des Führungsorgans 10 ist, sodass das Führungsorgan 10 in Schaltrichtung in der Führungskontur 21 ein Spiel von mindestens einem Millimeter oder mehr aufweist.

Der Sicherungsabschnitt 17 ist zweistufig ausgebildet, wobei bei einem Einfahren des Betätigungsorgans 19 von einer weiter außen liegenden Freigabeposition in eine Sicherungsposition zunächst das freie Ende des Führungsorgans 10 durch den Aufnahmebereich 20 ergriffen wird und nachfolgend über den Stützbereich 22 der Sicherungsabschnitt 17 mit dem aufgenommenen Führungsorgan 10 in Bezug auf die Wählrichtung entlang der Wählgasse 15 als Sicherungsrichtung S zentriert wird.

Wie aus der Figur 3 ersichtlich, weist das Betätigungsorgan 19 in einem Zwischenabschnitt zwischen dem Betätigungsabschnitt 18 und dem Sicherungsabschnitt 17 eine Abflachung 23 auf, in der ein Querbolzenabschnitt 24 verläuft. Durch den Querbolzenabschnitt 24 werden zwei Endpositionen für das Betätigungsorgan 19 festgelegt, wobei in der oberen Position die Freigabeposition und in der unteren Position die Sicherungsposition eingenommen ist. Zudem bildet die Abflachung 23 dadurch, dass diese nicht als umlaufende Ringnut, sondern nur als einseitige Abflachung ausgebildet ist, eine Verdrehsicherung für das Betätigungsorgan 19, sodass die Ausrichtung der Längserstreckung der Führungskontur 21 nicht unbeabsichtigt um die Betätigungsrichtung B verdreht werden kann.

Zur Abdichtung gegenüber der Umgebung ist um das Betätigungsorgan 19 ein O-Ring 25 gelegt, welcher sich an einer Innenfläche des Gehäuseabschnitts 2 abdichtend abstützt. Es kann optional vorgesehen sein, dass das Betätigungsorgan 19 eine Durchgangsöffnung aufweist, welche als eine Entlüftung für den Innenraum ausgestaltet sein kann.

Betrachtet man die Außenseite in der Figur 1, so stellt man fest, dass der Betätigungsabschnitt 18 als ein senkrecht zu der Betätigungsrichtung B ausgerichteter Bügel ausgebildet ist, welcher seitlich mindestens eine Führung, in diesem Fall zwei Führungen, aufweist, sodass der Betätigungsabschnitt 18 nicht versehentlich verdreht werden kann. Auch der Querbolzenabschnitt 24 ist in dieser Darstellung gut zu erkennen.

Dadurch, dass der Sicherungsabschnitt 17 in einer radialen Richtung zu der Hauptachse H der Schaltwelle 3 mit der Schaltkulisseneinrichtung 12 überlappt und in diesem Beispiel der Sicherungsabschnitt 17 und/oder das Führungsorgan 10 in der Sicherungsposition in die Schaltkulisseneinrichtung 12 eingreift und/oder dass ein mechanischer Sicherungsweg für die Schaltwelle 3 durch die Schaltkulisseneinrichtung 12 und insbesondere durch die Schaltkulisse 11 verläuft, wird eine sehr genaue Positionierung der Schaltwelle 3 zu der Schaltkulisse 11 erreicht. Die Position zur Zentrierung in der ersten Schaltgasse 14a neben der Schaltgasse 16 für den Rückwärtsgang ist für die Montage und das Einstellen der Schaltanordnung 1 besonders vorteilhaft, da bei diesem Ausführungsbeispiel eine externe Sperre für den Wählgassenabschnitt des Rückwärtsgangs bzw. der Schaltgasse 16 vorgesehen ist, die anhand dieser Position mit einer Fixierung in Wählrichtung und einer Toleranz in Schaltrichtung besonders einfach und genau eingestellt werden kann.

### Bezugszeichenliste

- 1: Schaltanordnung
- 2: Gehäuseabschnitt
- 3: Schaltwelle
- 4: Schalthebel
- 5: Wählhebel
- 6: Arretierung
- 7: Sicherungseinrichtung
- 8a, b: Schaltfinger
- 9: Rastkontur
- 10: Führungsorgan
- 11: Schaltkulisse
- 12: Schaltkulisseneinrichtung
- 13: Befestigungselemente
- 14a, b, c: Schaltgassen
- 15: Wählgasse
- 16: Schaltgasse
- 17: Sicherungsabschnitt
- 18: Betätigungsabschnitt
- 19: Betätigungsorgan
- 20: Aufnahmebereich
- 21: Führungskontur
- 22: Stützbereich
- 23: Abflachung
- 24: Querbolzenabschnitt
- 25: O-Ring
- B: Betätigungsrichtung
- H: Hauptachse

## Patentansprüche

1. Schaltanordnung (1) für ein Getriebe
mit einem Gehäuseabschnitt (2) zur Begrenzung eines Schaltraums,
mit einer Schaltwelle (3), wobei die Schaltwelle (3) in dem Schaltraum bewegbar angeordnet ist und eine Wähl- und Schaltrichtung aufweist, mit einer Schaltkulisseneinrichtung (12), wobei die Schaltkulisseneinrichtung (12) mit dem Gehäuseabschnitt (2) fest verbunden ist,
mit einer Sicherungseinrichtung (7), wobei die Sicherungseinrichtung (7) einen Sicherungsabschnitt (17) umfasst, wobei der Sicherungsabschnitt (17) zwischen einer Sicherungsposition und einer Freigabeposition bewegbar ist,
wobei in dem Freigabezustand des Sicherungsabschnitts (17) die Schaltwelle (3) freigegeben ist,
wobei der Sicherungsabschnitt (17) in der Sicherungsposition in einer radialen Richtung zu der Schaltwelle (3) überlappend zu der Schalkulisseneinrichtung (12) angeordnet ist, **dadurch gekennzeichnet, dass** in der Sicherungsposition des Sicherungsabschnitt (17) die Schaltwelle (3) mit dem Gehäuseabschnitt (2) über den Sicherungsabschnitt (17) gekoppelt ist und
dass die Schaltanordnung (1) ein Führungsorgan (10) aufweist, wobei das Führungsorgan (10) mit der Schaltwelle (3) fest verbunden ist und in die Schaltkulisseneinrichtung (12) eingreift und dadurch geführt wird, wobei der Sicherungsabschnitt (17) in der Sicherungsposition das Führungsorgan (10) in mindestens einer Richtung der Schaltwelle (3), einer Sicherungsrichtung (S), sichert.

2. Schaltanordnung (1) nach Anspruch 1, **dadurch gekennzeichnet, dass** die Schaltanordnung (1) als ein Schaltdom ausgebildet ist, wobei der Gehäuseabschnitt (2) als ein Deckel ausgebildet ist, in dem die Schaltwelle (3) bewegbar gelagert und die Schaltkulisseneinrichtung (12) festgelegt ist.

3. Schaltanordnung (1) nach Anspruch 1 oder 2, **dadurch gekennzeichnet, dass** der Sicherungsabschnitt (17) an dem freien Ende einen Aufnahmebereich (20) aufweist, wobei das Führungsorgan (10) in der Sicherungsposition in dem Aufnahmebereich (20) aufgenommen ist.

4. Schaltanordnung (1) nacheinem der vorhergehenden Ansprüche, **dadurch gekennzeichnet, dass** der Sicherungsabschnitt (17) in der Sicherungsposition das Führungsorgan (10) gegenüber der Schaltkulisseneinrichtung (12) abstützt.

5. Schaltanordnung (1) nach einem der vorhergehenden Ansprüche, **dadurch gekennzeichnet, dass** das Führungsorgan (10) einen Aufnahmebereich aufweist, wobei der Sicherungsabschnitt (17) in der Sicherungsposition in dem Aufnahmebereich aufgenommen ist.

6. Schaltanordnung (1) für ein Getriebe nach einem der vorhergehenden Ansprüche, **dadurch gekennzeichnet, dass** der Sicherungsabschnitt (17) in der Sicherungsposition das Führungsorgan (10) in der Sicherungsrichtung (S) sichert und in einer dazu senkrechten Richtung freigibt.

7. Schaltanordnung (1) nach Anspruch 6, **dadurch gekennzeichnet, dass** die Sicherungsrichtung (S) als die Wählrichtung ausgebildet ist.

8. Schaltanordnung (1) nach einem der Ansprüche 3 oder 5, **dadurch gekennzeichnet, dass** der Aufnahmebereich (20) eine Führungskontur (21) aufweist, wobei die Führungskontur (21) als eine ovale Kontur oder als eine Langlochkontur ausgebildet ist, deren Längserstreckung senkrecht zu der Sicherungsrichtung (S) ausgerichtet ist.

9. Schaltanordnung (1) nach Anspruch 8, **dadurch gekennzeichnet, dass** die Sicherungseinrichtung (7) einen Betätigungsabschnitt (18) aufweist,
wobei der Betätigungsabschnitt (18) mit dem Sicherungsabschnitt (17) gekoppelt ist und außerhalb des Schaltraums angeordnet ist, wobei der Sicherungsabschnitt (17) durch Betätigung des Betätigungsabschnitts (18) in einer Betätigungsrichtung (B) von der Sicherungsposition in die Freigabeposition bewegbar ist, wobei der Betätigungsabschnitt (18) und der Sicherungsabschnitt (17) gemeinsam ein Betätigungsorgan (19) bilden, wobei der Aufnahmebereich (20) des Sicherungsabschnitts (17) die Führungskontur (21) aufweist, und wobei das Betätigungsorgan (19) in Bezug auf die Betätigungsrichtung (B) verdrehsicher in dem Gehäuseabschnitt (2) angeordnet ist.

## Claims

1. Shifting arrangement (1) for a transmission having a housing section (2) for delimiting a shifting space, having a shift shaft (3), the shift shaft (3) being arranged movably in the shifting space and having a selecting and shifting direction, having a shift guide plate device (12), the shift guide plate device (12) being connected fixedly to the housing section (2), having a securing device (7), the securing device (7) comprising a securing section (17), it being possible for the securing section (17) to be moved between a securing position and a release position, the shift shaft (3) being released in the released state of the securing section (17), the securing section (17) being arranged in the securing position so as to overlap with respect to the shift guide plate device (12) in a radial direction with respect to the shift shaft (3), **characterized in that** the shift shaft (3) is coupled to the housing section (2) via the securing section (17) in the securing position of the securing section (17), and **in that** the shifting arrangement (1) has a guide member (10), the guide member (10) being connected fixedly to the shift shaft (3) and engaging into the shift guide plate device (12) and being guided as a result, the securing section (17) securing the guide member (10) in the securing position in at least one direction of the shift shaft (3), a securing direction (S).

2. Shifting arrangement (1) according to Claim 1, **characterized in that** the shifting arrangement (1) is configured as a shift tower, the housing section (2) being configured as a cover, in which the shift shaft (3) is mounted movably and the shift guide plate device (12) is fixed.

3. Shifting arrangement (1) according to Claim 1 or 2, **characterized in that** the securing section (17) has a receiving region (20) at the free end, the guide member (10) being received in the receiving region (20) in the securing position.

4. Shifting arrangement (1) according to one of the preceding claims, **characterized in that** the securing section (17) supports the guide member (10) with respect to the shift guide plate device (12) in the securing position.

5. Shifting arrangement (1) according to one of the preceding claims, **characterized in that** the guide member (10) has a receiving region, the securing section (17) being received in the receiving region in the securing position.

6. Shifting arrangement (1) for a transmission according to one of the preceding claims, **characterized in that**, in the securing position, the securing section (17) secures the guide member (10) in the securing direction (S) and releases it in a direction which is perpendicular with respect to the said securing direction (S).

7. Shifting arrangement (1) according to Claim 6, **characterized in that** the securing direction (S) is configured as the selecting direction.

8. Shifting arrangement (1) according to either of Claims 3 and 5, **characterized in that** the receiving region (20) has a guide contour (21), the guide contour (21) being configured as an oval contour or as a slot contour, the longitudinal extent of which is oriented perpendicularly with respect to the securing direction (S).

9. Shifting arrangement (1) according to Claim 8, **characterized in that** the securing device (7) has an actuating section (18), the actuating section (18) being coupled to the securing section (17) and being arranged outside the shifting space, it being possible for the securing section (17) to be moved by way of an actuation of the actuating section (18) in an actuating direction (B) from the securing position into the released position, the actuating section (18) and the securing section (17) together forming an actuating member (19), the receiving region (20) of the securing section (17) having the guide contour (21), and the actuating member (19) being arranged in the housing section (2) such that it cannot be rotated in relation to the actuating direction (B).

## Revendications

1. Agencement de changement de vitesses (1) pour une boîte de vitesses, comprenant
une partie de boîtier (2) pour limiter un espace de changement de vitesses,
un arbre de changement de vitesses (3), l'arbre de changement de vitesses (3) étant disposé de manière déplaçable dans l'espace de changement de vitesses et présentant une direction de sélection et de changement de vitesses,
un dispositif à coulisse de changement de vitesses (12), le dispositif à coulisse de changement de vitesses (12) étant connecté fixement à la partie de boîtier (2),
un dispositif de fixation (7), le dispositif de fixation (7) comprenant une partie de fixation (17), la partie de fixation (17) pouvant être déplacée entre une position de fixation et une position de libération, l'arbre de changement de vitesses (3) étant libéré dans l'état de libération de la partie de fixation (17),
la partie de fixation (17), dans la position de fixation, étant disposée dans une direction radiale par rapport à l'arbre de changement de vitesses (3) en chevauchant le dispositif à coulisse de changement de vitesses (12),
**caractérisé en ce que**
dans la position de fixation de la partie de fixation (17), l'arbre de changement de vitesses (3) est accouplé à la partie de boîtier (2) par le biais de la partie de fixation (17) et
l'agencement de changement de vitesses (1) présente un organe de guidage (10), l'organe de guidage (10) étant connecté fixement à l'arbre de changement de vitesses (3) et s'engageant dans le dispositif à coulisse de changement de vitesses (12) et étant guidé par celui-ci,
la partie de fixation (17), dans la position de fixation, fixant l'organe de guidage (10) dans au moins une direction de l'arbre de changement de vitesses (3), une direction de fixation (S).

2. Agencement de changement de vitesses (1) selon la revendication 1,
**caractérisé en ce que**
l'agencement de changement de vitesses (1) est réalisé sous forme de dôme de changement de vitesses, la partie de boîtier (2) étant réalisée sous forme de couvercle dans lequel l'arbre de changement de vitesses (3) est supporté de manière déplaçable et le dispositif à coulisse de changement de vitesses (12) est fixé.

3. Agencement de changement de vitesses (1) selon la revendication 1 ou 2,
**caractérisé en ce que** la partie de fixation (17) présente, à l'extrémité libre, une région de réception (20), l'organe de guidage (10), dans la position de fixation, étant reçu dans la région de réception (20).

4. Agencement de changement de vitesses (1) selon l'une quelconque des revendications précédentes,
**caractérisé en ce que**
la partie de fixation (17), dans la position de fixation, supporte l'organe de guidage (10) par rapport au dispositif à coulisse de changement de vitesses (12).

5. Agencement de changement de vitesses (1) selon l'une quelconque des revendications précédentes,
**caractérisé en ce que**
l'organe de guidage (10) présente une région de réception, la partie de fixation (17), dans la position de fixation, étant reçue dans la région de réception.

6. Agencement de changement de vitesses (1) pour une boîte de vitesses selon l'une quelconque des revendications précédentes,
**caractérisé en ce que**
la partie de fixation (17), dans la position de fixation, fixe l'organe de guidage (10) dans la direction de fixation (S), et le libère dans une direction perpendiculaire à celle-ci.

7. Agencement de changement de vitesses (1) selon la revendication 6,
**caractérisé en ce que**
la direction de fixation (S) est réalisée sous forme de direction de sélection.

8. Agencement de changement de vitesses (1) selon l'une quelconque des revendications 3 ou 5,
**caractérisé en ce que**
la région de réception (20) présente un contour de guidage (21), le contour de guidage (21) étant réalisé sous forme de contour ovale ou sous forme de contour à trou oblong, dont l'étendue longitudinale est orientée perpendiculairement à la direction de fixation (S).

9. Agencement de changement de vitesses (1) selon la revendication 8,
**caractérisé en ce que**
le dispositif de fixation (7) présente une partie d'actionnement (18), la partie d'actionnement (18) étant accouplée à la partie de fixation (17) et étant disposée à l'extérieur de l'espace de changement de vitesses, la partie de fixation (17) pouvant être déplacée, par actionnement de la partie d'actionnement (18) dans une direction d'actionnement (B), depuis la position de fixation dans la position de libération, la partie d'actionnement (18) et la partie de fixation (17) formant ensemble un organe d'actionnement (19), la région de réception (20) de la partie de fixation (17) présentant le contour de guidage (21), et l'organe d'actionnement (19) étant disposé dans la partie de boîtier (2) de manière non rotative par rapport à la direction d'actionnement (B).
